# EUROPÄISCHE PATENTSCHRIFT

(11) **EP 3 625 517 B1**
(45) Veröffentlichungstag und Bekanntmachung des Hinweises auf die Patenterteilung: **17.11.2021**
(21) Anmeldenummer: 18727723.1
(22) Anmeldetag: 17.05.2018
(51) Int. Cl.: G01B 11/02, G01B 11/25, A47L 9/00, A47L 9/28, A47L 11/40, G01C 21/20, G05D 1/02, G01S 17/48, G01S 17/931

(54) **MOBILE PLATTFORM MIT EINER ANORDNUNG ZUR BERÜHRUNGSLOSEN ENTFERNUNGSBESTIMMUNG NACH ART DES LICHTSCHNITTVERFAHRENS**
MOBILE PLATFORM WITH AN ARRANGEMENT FOR CONTACTLESS DISTANCE DETERMINATION ACCORDING TO THE LIGHT INTERSECTION METHOD
PLATEFORME MOBILE AVEC DISPOSITIF DE DÉTERMINATION DE DISTANCE SANS CONTACT SELON LE PROCÉDÉ DE LA SECTION LUMINEUSE

(30) Priorität: 19.05.2017 DE 102017208485
(43) Veröffentlichungstag der Anmeldung: 25.03.2020
(73) Patentinhaber: Fraunhofer-Gesellschaft zur Förderung der angewandten Forschung e.V., 80686 München (DE)
(72) Erfinder: BAUM, Winfried, 78183 Hüfingen (DE); HAMPP, Joshua, 70569 Stuttgart (DE)
(74) Vertreter: Rösler, Uwe
(86) Internationale Anmeldenummer: PCT/EP2018/062842
(87) Internationale Veröffentlichungsnummer: WO 2018/210986

(56) Entgegenhaltungen:
- EP-A2- 0 358 628
- WO-A1-2009/028956
- DE-A1-102010 040 386
- DE-A1-102010 051 602
- GB-A- 1 492 114

## Beschreibung

### Technisches Gebiet

Die Erfindung bezieht sich auf eine mobile Plattform mit einer Anordnung zur berührungslosen Entfernungsbestimmung nach Art des Lichtschnittverfahrens umfassend zwei Lichtquellen, ein Mittel zur Erzeugung einer optischen Kontrastlinie, ein Lichtdetektor zur Erfassung eines die mobile Plattform umgebenden Umgebungsszenarios sowie der optischen Kontrastlinie und zur Erzeugung von Detektorsignalen sowie eine Auswerte- und Steuereinheit, die auf der Grundlage der Detektorsignale Steuersignale generiert, die dem Antrieb und der Navigation der mobilen Plattform dienen.

### Stand der Technik

Zur Durchführung einer berührungslosen, zweidimensionalen Entfernungsbestimmung zu Objekten innerhalb einer Umgebung und damit verbunden zu deren Konturerfassung eignet sich in an sich bekannter Weise das so genannte Lichtschnittverfahren, bei dem eine Projektoranordnung zum Einsatz kommt, die typischerweise eine Lichtquelle, vorzugsweise in Form eines Lasers aufweist, dessen Laserstrahl mit Hilfe einer Abbildungsoptik fächerförmig aufgeweitet und auf eine zu erfassende Objektoberfläche in Form einer Lichtlinie projiziert wird. Die auf die Objektoberfläche projizierte Lichtlinie wird mit Hilfe eines positionsempfindlichen Lichtdetektors, vorzugsweise in Form einer CCD-Kamera, die räumlich versetzt zur Lichtquelle angeordnet ist, erfasst. Aus dem mit der Kamera gewonnenen Abbild der Umgebung wird mit Hilfe einer Auswerteeinheit mittels Bildauswertung die Lichtlinie extrahiert und analysiert. Hierzu werden in einem kurzen Zeitabstand jeweils ein Kamerabild ohne und eines mit projizierter Lichtlinie von der Umgebung aufgenommen. Durch Erzeugen eines Differenzbildes bleiben Helligkeitsunterschiede zwischen beiden Kamerabildern erhalten, wohingegen Bildbereiche gleicher Helligkeiten dunkel in Erscheinung treten. Mittels Schwellwertanalyse wird schließlich die optische kontrastreich in Erscheinung tretende Lichtlinie aus dem Differenzbild extrahiert.

Aufgrund des räumlich bekannten Versatzes zwischen Lichtquelle und Lichtdetektor bilden sich in Detektionsblickrichtung konturbedingte Verformungen längs der Lichtlinie aus, die unterschiedliche Distanzen zum Objekt widerspiegeln, welche mit Hilfe der Methode der Triangulation exakt bestimmbar sind. Auf diese Weise ist es möglich, die Abstände zwischen den längs der Lichtlinie befindlichen Ortspunkten und einem Referenzort, an dem bspw. die Messanordnung platziert ist, zu ermitteln und auf diese Weise ein exaktes Abbild eines Oberflächenprofils von einem Objekt längs der projizierten Lichtlinie zu erhalten. Im Wege einer Relativbewegung zwischen Messanordnung und einem Objekt, auf das die Lichtlinie projiziert wird, kann die räumliche Gestalt, d. h. ein dreidimensionales Oberflächenprofil eines Objektes ermittelt werden.

Die Anwendungsmöglichkeiten einer derartigen meist als Lichtschnittsensor bezeichneten Messanordnung sind mannigfaltig und reichen von bloßen Abstandsmessungen bis hin zu Profilerfassungen und Objekterkennungen.

Beispielsweise ist in der Druckschrift DE 10 2012 022 304 A1 eine Anordnung zur optischen Abtastung und Profilometrie nach dem Lichtschnittverfahren beschrieben, die eine Integration in ein Mikroskopsystem ermöglicht, um die Oberflächenkontur mikroskopierbarer Kleinstobjekt zu erfassen. Die beschriebene Messanordnung verfügt über eine gemeinsame Objektivoptik sowohl für den Beleuchtungsstrahlengang als auch für den Sichtpfad des Lichtdetektors.

Alle vorstehend bekannten Vorrichtungen, in denen das Lichtschnittverfahren zum Einsatz gelangt, benutzen zur Erzeugung und Projektion einer Lichtlinie eine speziell ausgebildete Abbildungsoptik, die für eine scharfe Abbildung der Lichtlinie auf einer in der Umgebung befindlichen Objektoberfläche sorgt.

Die Druckschrift DE 10 2010 040 386 A1 offenbart eine dentale Röntgeneinrichtung mit einer Bilderfassungseinheit zur Oberflächenerfassung, die einen mit Hilfe der Röntgeneinrichtung erfassten dentalen tomographischen Datensatz mit einem farbigen Höhenprofil des Patientengesichtes mit offenen Augen überlagert. Die hierzu erforderliche Bilderfassungseinheit weist wenigstens eine Lichtquelle auf, die ein polychromatisches Lichtbündel emittiert, das über eine, eine Schattenkante erzeugende Kante derart strahlt, so dass die Schattenkante in den Dentalbereich einer Person projiziert wird, der zudem von einer dentalen Röntgeneinrichtung bildtechnisch erfasst wird. Ferner ist eine die Schattenkante erfassende Detektoreinheit vorgesehen. Letztlich werden die mit Hilfe der Bilderfassungseinheit gewonnenen Farb- und Oberflächendaten mit der Röntgenaufnahme gemeinsam zur Darstellung gebracht.

Die Druckschrift DE 23 56 491 A beschreibt eine Vorrichtung sowie ein Verfahren zur Bestimmung der geometrischen Form einer Fläche, insbesondere von einer Oberfläche von zu schweißenden Gegenständen mit einer Strahlungsquelle, deren Strahlen eine zu vermessende Fläche beleuchten. Im Strahlenweg zwischen der Strahlungsquelle und der Fläche ist eine Abschirmung zur Erzeugung eines sich auf der Fläche darstellenden Schattenbildes angeordnet, wobei die Abschirmung geometrisch näher an der Fläche als an der Strahlungsquelle anzuordnen ist.

Die Druckschrift DE 103 28 537 A1 offenbart eine Vorrichtung sowie ein Verfahren zum Vermessen der Dimension eines Körpers, wobei die Oberfläche des zu vermessenden Körpers längs einer vorgegeben Raumachse relativ zu einem Strahlungsmittel bewegt wird, das auf die Oberfläche des bewegten Körpers eine scharfe Lichtkante projiziert, die wiederum von einer Sensoreinrichtung erfasst und ausgewertet wird. Wesentlich bei der bekannten Vorrichtung ist die streng geometrische Anordnung und Bewegung eines zu vermessenden Körpers relativ zur Messanordnung.

Aus der Druckschrift EP 0 358 628 A2 ist ein mobiler Roboter, beispielsweise in Form eines Reinigungsroboters zu entnehmen, zu dessen Navigation an der mobilen Plattform wenigstens ein Lichtprojektor angebracht ist, der zur Erzeugung eines Lichtstreifens eine Blitzröhre als Lichtquelle sowie zwei Schlitzblenden umfasst.

Ferner geht aus der Druckschrift DE 10 2010 051 602 A1 die Verwendung wenigstens zweier Bildaufnahmen zum Zwecke einer Positionsbestimmung von Objekten hervor, wobei die Bildaufnahmen entweder bei unterschiedlichen Beleuchtungen oder mit unterschiedlichen Kamerastandorten gewonnen werden können.

### Darstellung der Erfindung

Der Erfindung liegt die Aufgabe zugrunde eine mobile Plattform mit einer Anordnung sowie ein Verfahren zur berührungslosen Entfernungsbestimmung nach Art des Lichtschnittverfahrens derart anzugeben, so dass mit möglichst einfachen und insbesondere kostengünstigen Mitteln eine gattungsgemäße Entfernungsbestimmung, die gleichfalls auch für die Ermittlung von Konturen bzw. Profilen von Objekten beliebiger Art eingesetzt werden kann, möglich sein soll. Die Anordnung soll insbesondere zum Zwecke einer autonomen Navigation der mobilen Plattform für eine zuverlässige und räumlich aufgelöste Detektion eines die mobile Plattform umgebenden Szenarios dienen.

Eine lösungsgemäße Vorrichtung ist Gegenstand des Anspruches 1, ein lösungsgemäßes Verfahren ist Gegenstand des Anspruches 10. Den Erfindungsgedanken in vorteilhafter Weise ausbildende Merkmale sind Gegenstand der Unteransprüche sowie der weiteren Beschreibung, insbesondere unter Bezugnahme auf die Erläuterungen der Ausführungsbeispiele zu entnehmen.

Bei der Suche nach einfachen und kostengünstigen Lösungen für eine mobile Plattform mit einer Anordnung, mit der es möglich sein soll, Entfernungsmessungen in einer präzisen Art und Weise unter Nutzung des Lichtschnittverfahrens durchzuführen, wendet sich der lösungsgemäße Gedanke von der üblichen Praxis der Suche nach möglichst kostengünstigen Einzelkomponenten zur Durchführung des Lichtschnittverfahrens ab und schlägt einen neuen Weg ein, nämlich den vollständigen Verzicht auf die den von der Lichtquelle emittierten Lichtstrahl abbildenden Optik. Dieser lösungsgemäße Vorstoß ist umso mehr ungewöhnlich und erstaunlich beim Einsatz der Anordnung als integraler Bestandteil an oder in einer selbst, d.h. autonom navigierenden mobilen Plattform, zu deren sicheren Fahrwegplanung und Fahrwegkontrolle die Detektion der Umgebung von essentieller Bedeutung ist. Nicht zuletzt deshalb sind gattungsgemäße mobile Plattformen mit technisch hochwertigen und entsprechend kostenintensiven Sensoren, bspw. in Form von Laserscannern u.ä., ausgerüstet.

Eine lösungsgemäße mobile Plattform mit einer Anordnung zur berührungslosen Entfernungsbestimmung nach Art des Lichtschnittverfahrens mit zwei Lichtquellen, einem Mittel zur Erzeugung einer optischen Kontrastlinie und einem Lichtdetektor zur Erfassung eines die mobile Plattform umgebenden Umgebungsszenarios sowie der optischen Kontrastlinie und zur Erzeugung von Detektorsignalen sowie eine Auswerte- und Steuereinheit, die auf der Grundlage der Detektorsignale Steuersignale generiert, die dem Antrieb und der Navigation der mobilen Plattform dienen, zeichnet sich grundsätzlich dadurch aus, dass das Mittel zur Erzeugung der optischen Kontrastlinie in unmittelbarer Abfolge und beabstandet zu den Lichtquellen derart angeordnet ist, dass im Strahlengang des emittierten Lichtes zwischen den Lichtquellen und dem Mittel ausschließlich Luft ist. Das Mittel weist eine von dem emittierten Licht überstrahlbare Kante auf, durch die ein Schatten der Kante projizierbar ist, der der Kontrastlinie entspricht, an der ein von der Lichtquelle projizierbarer beleuchteter Bereich angrenzt. Somit ist der Einsatz einer bis anhin bekannten refraktiven oder diffraktiven Optik zur fokussierten bzw. scharfen Abbildung des von der Lichtquelle emittierten Lichtes in Form einer projizierbaren Lichtlinie in der lösungsgemäßen Anordnung ausdrücklich ausgeschlossen. Der Lichtdetektor ist zur räumlich aufgelösten Erfassung zumindest der optischen Kontrastlinie geeignet ausgebildet und räumlich beabstandet zur Lichtquelle angeordnet.

Die Verwendung des Begriffes "optische Kontrastlinie" anstelle des üblicherweise in diesem Zusammenhang benützten Begriffes der "Lichtlinie" rührt daher, dass die optische Kontrastlinie durch den Schattenwurf des die Kante aufweisenden Mittels erzeugt wird, die in Form der Schattenlinie den Übergang vom Schattenbereich zum beleuchteten Bereich auf einer Projektionsoberfläche trennt. Demgegenüber bildet sich eine Lichtlinie ausschließlich durch Projektion eines linienhaften Lichtstrahls auf einer Projektionsfläche aus.

Wie auch bei bekannten gattungsgemäßen Messanordnungen, sind bei einem lösungsgemäßen Ausführungsbeispiel die zwei Lichtquellen, die zur Erzeugung einer Lichtlinienprojektion erforderliche Mittel sowie der Lichtdetektor auf einem gemeinsamen Träger mit einer festen räumlichen Anordnung zueinander angebracht, wobei die Lichtquellen nicht oder nur schwach fokussiertes Licht emittieren und vorzugsweise in Form einer handelsüblichen Leuchtdiode, Glüh- oder Gasentladungslampe ausgebildet sind. Der Träger ist an einer mobilen Plattform angeordnet oder ist Teil des Chassis der mobilen Plattform. Auf diese Weise ist gewährleistet, dass die Lichtquellen, das Mittel sowie der Lichtdetektor zur Erfassung eines die mobile Plattform umgebenden Umgebungsszenarios angeordnet sind, so dass die vom Lichtdetektor generierten Detektorsignale mittel- oder unmittelbar an die ebenfalls an der mobilen Plattform angeordnete Auswerte- und Steuereinheit übermittelbar sind, auf deren Grundlage die Auswerte- und Steuereinheit Steuersignale generiert, die dem Antrieb und der Navigation der mobilen Plattform dienen.

Die Lichtquellen können je nach Anforderungen und Einsatzzweck Licht mit Wellenlängen im sichtbaren oder unsichtbaren Wellenlängenbereich emittieren. Derartige Lichtquellen stellen kostengünstige Komponenten dar und entsprechen daher dem Wunsch der Realisierung einer möglichst preiswerten Lösung zur berührungslosen Entfernungsbestimmung nach Art des Lichtschnittverfahrens.

Das Mittel zur Erzeugung der optischen Kontrastlinie, das gegenüber der wenigstens einen Lichtquelle beabstandet angebracht bzw. angeordnet ist, stellt vorzugsweise eine Blende dar, die aus einem für das von den Lichtquellen emittierte Licht intransparenten Material besteht und über wenigstens eine Kante verfügt, die vorzugsweise geradlinig ausgebildet ist und vorzugsweise quer zur Strahlrichtung des Lichtes orientiert ist und von diesem teilweise überstrahlt wird. Das Licht der Lichtquellen wird somit anteilsmäßig bspw. hälftig durch die Blende blockiert, so dass ein Schattenbild der Blende mit einem linienförmigen Kantenschatten in die Umgebung bspw. auf die Oberfläche eines Objektes geworfen wird. Der Kantenschatten trennt den von der Lichtquelle beleuchteten Objektbereich von dem durch die Blende abgeschatteten Objektbereich längs der optischen Kontrastlinie. Der Lichtdetektor, der in Form einer handelsüblichen positionsempfindlichen Kamera, vorzugsweise einer CCD-oder CMOS-Kamera ausgebildet ist, ist versetzt zur Lichtquelle außerhalb des von der wenigstens einen Lichtquelle beleuchteten Raumbereiches am Träger angebracht.

In einer einfachen Ausführungsform dient als Mittel zur Erzeugung der optischen Kontrastlinie eine Kulisse des Trägers selbst, die nicht notwendigerweise als Blende im Sinne eines sich bspw. orthogonal in den Lichtweg der Lichtquelle erstreckendes Flächenstück ausgebildet ist, sondern lediglich eine vom Licht der Lichtquellen überstrahlte Gehäuse- oder Trägerkante darstellt. Auf diese Weise lässt sich die Anordnung mit einem minimalen Aufwand und Einsatz von Komponenten realisieren.

Zur Wahl des für die lösungsgemäße Anordnung erforderlichen Lichtdetektors bestehen keine besonderen Anforderungen, so dass handelsübliche und preisgünstige positionsempfindliche Lichtdetektoren, bspw. in Form von CCD- oder CMOS-Bildsensoren, geeignet sind.

Für die Auswertung der mittels der Kamera aufgenommenen Umgebungsbilder, die den Bereich der projizierten optischen Kontrastlinie enthalten, ist eine am Träger angebrachte Auswerteeinheit vorgesehen, an die die Umgebungsbilder über eine drahtlose oder drahtgebundene Signalleitung übermittelt werden. Die Auswerteeinheit umfasst ein Umgebungsmodell von der Umgebung, in der die mobile Plattform eingesetzt wird. Alternativ oder in Kombination vermag die Auswerteeinheit auf der Grundlage der von der Kamera erfassten Umgebungsbilder sowie unter Nutzung zusätzlicher Navigationsinformationen, die bspw. Odometrisch oder vermittels einer mitgeführten Satellitennavigationsempfangseinheit gewonnen werden, ein Umgebungsmodell selbstständig zu generieren. Auf der Grundlage eines vorgebbaren Bewegungsmusters und/oder einer vorgebbaren Bewegungstrajektorie sowie unter der Maßgabe der Kollisionsvermeidung mit in der Umgebung befindlichen Objekten wird von einer mit der Auswerteinheit in Kommunikationsaustausch stehenden Steuereinheit, die vorzugsweise in Kombination mit der Auswerteeinheit als eine Einheit ausgebildet und angeordnet ist, Steuersignale generiert, die dem Antrieb und der Navigation, d.h. der Lenkung der mobilen Plattform dienen.

Neben der bereits erwähnten geradlinigen Ausbildung der Blendenkante kann es in bestimmten Anwendungsfällen vorteilhaft sein, die Blendenkante zu strukturieren, beispielsweise unter Einprägung eines Wellen- oder Sägezahnprofils oder entsprechende geometrische Abwandlungen hiervon, so dass der auf wenigstens eine in der Umgebung befindliche Objektoberfläche projizierte Kantenschatten von einer sägezahnförmigen oder wellenförmigen optischen Kontrastlinie begrenzt wird, die vom Lichtdetektor erfasst und zur Entfernungsmessung zum Objekt der weiteren Auswertung zugrunde gelegt wird.

Die vorstehend erläuterte Ausführung des Mittels zur Erzeugung der optischen Kontrastlinie in Form einer Blende mit einer geradlinigen oder strukturierten Blendenkante, über die eine entsprechend geformte optische Kontrastlinie auf die Oberfläche wenigstens eines Objekt in der Umgebung projizierbar ist, ermöglicht eine Entfernungsbestimmung zu Raumpunkten, die allesamt längs der zweidimensionalen optischen Kontrastlinie liegen. Für jeden von der Kamera erfassten Raumpunkt, der längs der optischen Kontrastlinie liegt und jeweils von einem Pixel oder mehreren Pixeln auf dem lichtempfindlichen und positionsauflösenden Bildsensor der Kamera erfasst wird, wird ein Abstands-, d.h. ein Tiefenwert ermittelt. Die Gesamtheit aller ermittelten Tiefenwerte bildet eine Raumkurve, die die Umgebungskontur bspw. Objektkontur entlang der Kontrastlinie beschreibt.

Eine vorteilhafte Weiterbildung der Blende mit wenigstens einer zusätzlich zweiten Blendenkante, deren Kantenverlauf orthogonal oder geneigt gegenüber der ersten Blendenkante angeordnet ist, eröffnet die Möglichkeit die Entfernungspunkte längs zweier sich vorzugsweise orthogonal kreuzender optischer Kontrastlinien, die auf ein in der Umgebung befindliches Objekt projiziert werden, zu ermitteln, wodurch Tiefeninformationen in einer weiteren Ausdehnungsrichtung des Objektes gewonnen werden können.

Die zwei am Träger angebrachten Lichtquellen sind mit einem räumlichen Versatz zueinander derart angeordnet, so dass die optischen Kontrastlinien, die sich jeweils durch separates Beleuchten der Blende und insbesondere der Blendenkante mit beiden Lichtquellen ausbilden, nicht deckungsgleich sind. Hierzu bietet es sich an, beide Lichtquellen mit jeweils gleichem Abstand zur Blende und einem orthogonal zur Blendenkante orientierten Versatz anzuordnen. Wie die weiteren Ausführungen zeigen werden, dient der Einsatz von zwei separaten Lichtquellen der Verbesserung der mit der Anordnung durchzuführenden Entfernungsbestimmung, zumal der lösungsgemäße Verzicht auf eine fokussierende Optik, wie sie bei gattungsgemäßen Vorrichtungen zum Einsatz kommt, zwei wesentliche Nachteile mit sich bringt:
1. Da die Lichtquellen, bspw. in Form einer LED, nicht punkt- oder linienförmig sind, sondern eine Ausdehnung größer Null besitzt, bildet sich der die optische Kontrastlinie entsprechende Übergang vom beleuchteten zum abgeschatteten Objektbereich unscharf aus, d.h. der Übergang ist nicht linienhaft, sondern weist eine makroskopische Breite auf, innerhalb der die Helligkeitsübergänge verschmiert sind.
2. Durch das relativ weitwinklige Abstrahlverhalten der Lichtquellen werden Umgebungsobjekte nicht nur direkt, sondern teilweise auch indirekt, also nach Reflexion an anderen Objekten angestrahlt. Zudem wird das von den Lichtquellen abgestrahlte Licht vermittels der Blende nur einseitig abgeschattet, wodurch im Vergleich zu einer reinen Lichtlinienprojektion verhältnismäßig viel Streulicht erzeugt wird, eine Auswertung der optischen Kontrastlinie, insbesondere im Wege des eingangs erläuterten Differenzbildverfahrens nachhaltig beeinflusst.

Die beiden vorstehenden Nachteile führen unweigerlich zur Verschlechterung der Messgenauigkeit und der damit verbundenen Empfindlichkeit und Zuverlässigkeit der als lösungsgemäß vorgeschlagenen Anordnung zur berührungslosen Entfernungsbestimmung auf der Grundlage des Lichtschnittverfahrens.

Da die Unschärfe des Kantenschattens primär von der räumlichen Ausdehnung der Lichtquellen und ihrem Abstand zur Schatten werfenden Blende abhängt, d.h. die Abhängigkeit ist von an sich bekannten und konstant vorgebbaren Geometriegrößen bestimmt, ist die Unschärfe, die sich in der Breite des projizierten Kantenschattens ausprägt, ebenfalls bekannt. Somit ist es grundsätzlich möglich, durch geeignete Wahl dieser Geometrieparameter die Unschärfe zu minimieren. Dies kann durch eine geeignete konstruktive Lösung realisiert werden.

Andererseits ist die Abbildungsgröße der Breite der den Kantenschatten repräsentierenden optischen Kontrastlinie im Lichtdetektor, also in dem von der Kamera aufgenommenen Kamerabild, umgekehrt proportional zur Distanz zum Umgebungsobjekt. Somit ist das Maß der Unschärfe, d.h. die Breite der von der Kamera erfassten optischen Kontrastlinie, die sensorseitig einer bestimmten Anzahl von Sensorpixeln entspricht, unabhängig von der Distanz zwischen Umgebungsobjekt und Kameraposition immer gleich und damit ebenfalls bekannt.

Die Kenntnis über die Unschärfe, durch die die optische Kontrastlinie von einer idealen Linienform abweicht und eine Breite besitzt, innerhalb der ein kontinuierlicher Übergang von hell zu dunkel vorhanden ist, wird einem Korrelationsverfahren zugrunde gelegt, durch das die exakte Lage der im Kamerabild enthaltenen optischen Kontrastlinie für die weitere Auswertung mittels Lichtschnittverfahrens bestimmt wird.

Somit kann dem vorstehenden Nachteil zu 1. betreffend die Unschärfe sowohl durch konstruktive Maßnahmen als auch auf rechnerischem Wege, vermittels Korrelationsverfahren, wirksam entgegengetreten werden.

Bereits mit den vorstehenden Maßnahme kann die lösungsgemäße Anordnung in einer Vielzahl von Einsatzfällen und insbesondere in Bereichen, in denen wenig reflektierende Umgebungsobjekte vorhanden sind, die bei Bestrahlung störendes Streulicht hervorrufen, bereits erfolgreich eingesetzt werden.

Die lösungsgemäße Anordnung ist daher besonders geeignet zur Durchführung eines Verfahrens, das der berührungslosen Entfernungsbestimmung nach Art des Lichtschnittverfahrens dient und bei dem ein mit einer Lichtquelle beleuchtetes Mittel mit einer Kante einen Kantenschatten projiziert, der sich durch eine Kontrastlinie zu einem unmittelbar an den projizierten Kantenschatten angrenzenden, von der Lichtquelle beleuchteten Bereich auszeichnet, wobei die Kontrastlinie von einem Lichtdetektor erfasst und der Entfernungsbestimmung nach dem Lichtschnittverfahren zugrunde gelegt wird. Insbesondere trifft dabei das von der Lichtquelle emittierte Licht unmittelbar, d.h. ausschließlich längs eines Luftweges auf das vorzugsweise als Blende ausgebildete Mittel, wobei durch Überstrahlen der Blende der Kantenschatten auf ein von der Blende beabstandetes Objekt in der Umgebung projiziert wird.

Insbesondere in Fällen, in denen die Umgebungslichtverhältnisse ungünstig hell sind, bietet es sich an, wenigstens zwei vom Lichtdetektor erfasste Bilder dem Lichtschnittverfahren zugrunde zu legen, wobei ein erstes Bild eine vom Lichtdetektor erfasste Umgebung in einem unbeleuchteten Zustand, d.h. ohne Licht der Lichtquelle wiedergibt, und das andere Bild die Umgebung im beleuchteten Zustand darstellt, d.h. mit dem projizierten Kantenschatten, der der optischen Kontrastlinie entspricht. Beide Bilder werden nachfolgend mittels Auswerteeinheit einem Differenzbildverfahren unterzogen, wodurch Bildbereiche mit gleichen oder identischen Helligkeitswerten bei der weiteren Auswertung unterdrückt werden.

Die vorstehenden Maßnahmen helfen jedoch nicht zur Vermeidung des vorstehend unter Punkt 2 genannten Nachteils, gemäß dem durch das von der Lichtquelle emittierte Licht hervorgerufenes Streulicht, das durch Beleuchten von Komponenten der Messanordnung selbst oder insbesondere von Objekten in der Umgebung hervorgerufen wird, die Auswertung selbst unter Verwendung eines Differenzbildverfahrens negativ beeinflusst.

Zur Vermeidung auch dieses Nachteils, werden lösungsgemäße anstelle einer einzelnen Lichtquelle zwei räumlich versetzt zueinander angeordnete Lichtquellen vorgesehen, deren Licht jeweils durch ein und dieselbe Blende oder durch eine jeweils beiden Lichtquellen separat zugeordnete Blende abgeschattet wird, wobei die von beiden Lichtquellen in die Umgebung projizierten Kantenschatten nicht deckungsgleich sind. Hierzu weisen beide Lichtquellen einen Abstand auf, der vorzugsweise orthogonal zum Blendenkantenverlauf orientiert ist.

Zur Durchführung des Verfahrens zur Entfernungsbestimmung erfasst die Kamera ein Bild von der Umgebung, die von einer ersten Lichtquelle beleuchtet wird und einen Kantenschatten enthält, der einer ersten optischen Kontrastlinie entspricht. Unmittelbar darauffolgend wird die Umgebung ausschließlich von der zweiten Lichtquelle beleuchtet während die Kamera ein zweites Bild von der Umgebung mit einer entsprechenden zweiten Kontrastlinie aufnimmt. Beide aufgenommenen Bilder werden im Rahmen eines Differenzbildverfahrens bearbeitet. Da beide Lichtquellen nur geringfügig voneinander versetzt am Träger platziert sind, ist der Streulichteinfluss für beide Einzelbilder fast identisch, so dass im Differenzbild nur der schmale Bereich zwischen beiden optischen Kontrastlinien hell in Erscheinung tritt. Auf diese Weise kann der Streulichteinfluss sehr stark reduziert werden.

Die Auswertung des in der vorstehenden Weise gewonnenen Differenzbildes nutzt in vorteilhafter Weise eine weitere Information, die die diskutierte Unschärfeproblematik weiter zu reduzieren hilft. Durch den bekannten Abstand beider Lichtquellen am Träger sowie jeweils deren bekannter Abstand zur Blende ist auch der Abstand der beiden projizierten und optischen Kontrastlinien zueinander bekannt, so dass es leichter ist, beide Kontrastlinien von anderen Hell-/Dunkelübergängen im Bild, bspw. bei texturierten Objektoberflächen, zu unterscheiden. Auf diese Weise kann die Zuverlässigkeit bzw. Robustheit des Korrelationsverfahrens verbessert werden. Selbstverständlich lassen sich auch drei oder mehr Lichtquellen mit jeweils unterschiedlichen Positionen auf dem Träger anbringen, die in der vorstehend erläuterten Weise genutzt werden, wobei die jeweils zu den einzelnen Belichtungssituationen zugeordneten Kamerabilder einem Differenzbildverfahren zur weiteren Auswertung zugrunde gelegt werden können. Auch ermöglicht die Verwendung mehrerer Lichtquellen mit zum Teil größeren geometrischen Versatz zueinander die Aufnahme mehrerer unterschiedlicher, d.h. weiter auseinander liegender Kantenschatten auf der Oberfläche eines Umgebungsobjektes, so dass durch die Auswertung mehrerer optischer Kontrastlinien, die makroskopisch große Abstände zueinander aufweisen, eine dreidimensionale Entfernungsmessung, beispielsweise an einem in der Umgebung befindlichen Objekt möglich wird.

Neben der Verwendung der Kamerabilder zur reinen Abstandsmessung, wie vorstehend beschrieben, kann die Anordnung für eine Überwachungsfunktion eingesetzt werden. Durch die Anbringung der Anordnung auf einer mobilen Plattform wird die Erfassung des Umgebungsszenarios ermöglicht, innerhalb dem die Plattform in die Lage versetzt wird autonom zu navigieren. Ebenso können auf dieser Weise Umgebungskartierungen mit der Anordnung vorgenommen werden. Zudem ist es denkbar, die lösungsgemäße Anordnung zu Zwecken der Mustererkennung von dreidimensionalen feststehenden sowie auch bewegten Objekten einzusetzen. Denkbar in diesem Zusammenhang ist der Einsatz der Anordnung zur Identifizierung von Objekten anhand ihrer 3D-Geometrie.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

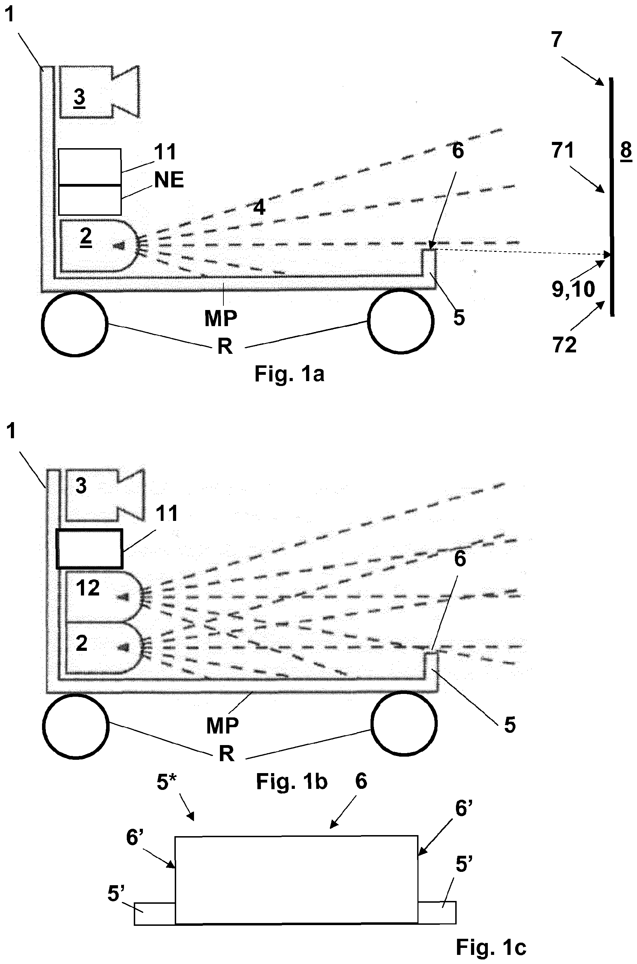

Fig. 1a,b, c Schematisierte Darstellung von Ausführungsformen, von denen b) und c) lösungsgemäße Ausführungsformen zeigen.

### Wege zur Ausführung der Erfindung, gewerbliche Verwendbarkeit

Figur 1a zeigt eine Ausbildungsform, die nicht Teil der Erfindung ist, für eine Anordnung zur berührungslosen Entfernungsbestimmung mit einem Träger 1, der Teil eines Chassis einer mobilen Plattform MP ist, an dem eine Lichtquelle 2 sowie ein Lichtdetektor 3 angebracht sind. Die Lichtquelle 2 emittiert divergentes Licht 4. Beabstandet zur Lichtquelle 2 ist eine Blende 5 angebracht, die gleichfalls fest am Träger 1 angebracht ist. Das Licht 4 der Lichtquelle 2 überstrahlt die Blende 5, die eine geradlinige Blendenkante 6 aufweist, die auf der Oberfläche 7 eines in der Umgebung befindlichen Objektes 8 einen Kantenschatten 9 projiziert. Der Kantenschatten 9 trennt einen von der Lichtquelle 2 bestrahlten Oberflächenbereich 71 von einem durch die Blende 5 abgeschatteten Oberflächenbereich 72 ab. Der Lichtdetektor 3 erfasst das Objekt 8 und insbesondere den Kantenschatten 9, der zur weiteren Auswertung der optischen Kontrastlinie 10 entspricht, die dem Lichtschnittverfahren zugrunde gelegt wird. Das zum Zwecke der Entfernungsbestimmung zum Objekt 8 auszuwertende Kamerabild, das von Seiten des Lichtdetektors 3 aufgenommen wird, wird im Rahmen einer Auswerteeinheit 11 ausgewertet, die mit dem Lichtdetektor 3 drahtgebunden oder drahtlos in Kommunikation steht. Im Rahmen der Auswerteeinheit 11 werden die Kamerabilder unter Zugrundelegung von vorgebbaren und/oder selbstständig generierten Informationen von der Umgebung, in der sich die mobile Plattform MP fortbewegt, ausgewertet. Unter der Maßgabe einer kollisionsfreien autonomen Fortbewegung der mobilen Plattform MP werden von einer mit der Auswerteeinheit 11 kombinierten Steuereinheit Steuersignale zum Antrieb sowie zur Lenkung der Räder R generiert.

Optional ist zur Navigationsunterstützung an der mobilen Plattform MB ein Navigationssignalempfänger NE angebracht, dessen Empfangssignale der Auswerteeinheit 11 zuführbar sind.

Figur 1b zeigt eine lösungsgemäße Ausführungsform, bei der ergänzend zur Lichtquelle 2 gemäß Figur 1a eine zweite Lichtquelle 12 am Träger 1 angebracht ist. Die zweite Lichtquelle 12 ist in der Darstellung gemäß Figur 1b mit einem minimalen Abstand vertikal über der ersten Lichtquelle 2 angebracht, so dass das von beiden Lichtquellen jeweils emittierte Licht weitgehend identische Streulichtanteile innerhalb der Umgebung der Anordnung zu erzeugen vermag. Auf die vorstehenden Ausführungen zur Durchführung eines Differenzbildverfahrens unter Verwendung zweier Lichtquellen 2, 12 wird auf die vorstehenden Beschreibungsinhalte verwiesen.

Die lösungsgemäße Ausführungsform einer mobilen Plattform MP kann in vorteilhafter Weise mit einer in Figur 1c illustrierten Blende 5*, die in einer Frontalansicht entgegen der Überstrahlungsrichtung dargestellt ist, versehen sein. Die modifizierte Blende 5* weist zusätzlich zur horizontal orientierten Blendenkante 6 einen Blendenabschnitt 5' mit zumindest einer zur Blendenkante 6 orthogonal orientierten Blendenkante 6' auf.

Das Vorsehen der modifizierten Blende 5* erweist sich als besonders vorteilhaft bei der Ausbildung der mobilen Robotereinheit als Bodenreinigungsroboter, dessen Aufgabe die Reinigung von Bodenflächen ist. Insbesondere bei der Reinigung wandnaher Bodenabschnitte gilt es einen vorgebbar geringen Abstand zwischen der mobilen Plattform und der Wand einzuhalten. Dies ist erschwert durch das Vorsehen von Bodensockelleisten, deren Existenz und Dimension durch einen zusätzlichen, durch die Blendenkante 6' hervorgerufenen vertikalen Schattenkantenverlauf exakt erfassbar ist. Auch unterstützt der zusätzliche, vertikale Schattenkantenverlauf das selbstständige Erkennen von bodenständigen Gegenständen, wie bspw. Eine Ladestation, über die sich die mobile Plattform autonom mit elektrischer Energie versorgen kann.

Das Vorsehen eines Lichtdetektors 3 insbesondere in Form einer Kamera ermöglicht nicht nur die raumaufgelöste Detektion der wenigstens einen Schattenkante, sondern gestattet überdies bedarfsweise die Erfassung und Übertragung des Kamerabildes in Form eines Videobildes zum Zwecke der optischen Überwachung und/oder Inspektion des gesamten Umgebungsszenarios. Hierzu können die mitgeführten Lichtquellen als Szenebeleuchtungsmittel gezielt eingesetzt werden. Auch wird durch eine derartige Bilderfassung von dem Umgebungsszenario die Schätzung über den Ort und Orientierung innerhalb der Umgebung auf dem Prinzip der Odometrie möglich. Zudem können die mit der Kamera erfassten Bild- oder Videoinformationen unter Verwendung Muster-erkennender Bildauswertesoftware zur gezielten Navigation der mobilen Plattform relativ zu in der Umgebung verorteter Landmarken oder Beleuchtungsmuster dienen.

### Bezugszeichenliste

- 1: Träger
- 2: Lichtquelle
- 3: Lichtdetektor
- 4: Licht
- 5: Blende
- 5*: Modifizierte Blende
- 5': Blendenabschnitt
- 6, 6': Kante, Blendenkante
- 7: Objektoberfläche
- 8: Objekt
- 71: Beleuchteter Objektoberflächenbereich
- 72: Abgeschatteter Objektoberflächenbereich
- 9: Kantenschatten
- 10: Optische Kontrastlinie
- 11: Auswerteeinheit
- 12: Zweite Lichtquelle
- MP: Mobile Plattform
- NE: Navigationssignalempfangseinheit
- R: Rad

## Patentansprüche

1. Mobile Plattform (MP) mit einer Anordnung zur berührungslosen Entfernungsbestimmung nach Art des Lichtschnittverfahrens umfassend zwei Lichtquellen (2, 12), ein Mittel zur Erzeugung einer optischen Kontrastlinie (10), ein Lichtdetektor (3) zur Erfassung eines die mobile Plattform umgebenden Umgebungsszenarios sowie der optischen Kontrastlinie und zur Erzeugung von Detektorsignalen sowie eine Auswerte- und Steuereinheit, die auf der Grundlage der Detektorsignale Steuersignale generiert, die dem Antrieb und der Navigation der mobilen Plattform dienen,
wobei das Mittel in unmittelbarer Abfolge und beabstandet zu den Lichtquellen derart angeordnet ist, dass im Strahlengang des jeweils von den Lichtquellen emittierten Lichtes zwischen den Lichtquellen und dem Mittel ausschließlich Luft ist, das Mittel eine von dem emittierten Licht beider Lichtquellen überstrahlbare erste Kante (6, 6') aufweist, durch die ein Schatten (9) der Kante projizierbar ist, der der Kontrastlinie entspricht, an der ein von der Lichtquelle projizierbarer beleuchteter Bereich der Umgebung angrenzt, und
wobei die Lichtquellen derart mit einem räumlichen Versatz relativ zueinander angeordnet sind, so dass die Kontrastlinien, die sich durch separates Beleuchten der wenigstens ersten Kante (6, 6') zur Erzeugung jeweils einer optischen Kontrastlinie mit beiden Lichtquellen ausbilden, nicht deckungsgleich sind und wobei die Auswerteeinheit (11) die jeweils von dem Lichtdetektor erfassten Kontrastlinien einem Differenzbildverfahren unterzieht sowie der Entfernungsbestimmung nach dem Lichtschnittverfahren zugrunde legt.

2. Mobile Plattform nach Anspruch 1,
**dadurch gekennzeichnet, dass** die wenigstens eine Lichtquelle, das Mittel zur Erzeugung einer Lichtlinienprojektion und der Lichtdetektor auf einem gemeinsamen Träger (1) fest angeordnet sind und eine feste räumliche Zuordnung zueinander besitzen.

3. Mobile Plattform nach Anspruch 1 oder 2,
**dadurch gekennzeichnet, dass** das Mittel in Art einer für das Licht intransparenten Blende ausgebildet ist, und
dass die wenigstens erste Kante des Mittels geradlinig oder strukturiert ist.

4. Mobile Plattform nach einem der Ansprüche 1 bis 3,
**dadurch gekennzeichnet, dass** das Mittel wenigstens eine von dem emittierten Licht überstrahlbare zweite Kante (6') besitzt, die orthogonal oder geneigt gegenüber der ersten Kante angeordnet ist.

5. Mobile Plattform nach einem der Ansprüche 1 bis 4,
**dadurch gekennzeichnet, dass** die wenigstens eine Lichtquelle (2, 12) ein LED, Glüh- oder Gasentladungslampe ist.

6. Mobile Plattform nach einem der Ansprüche 1 bis 5
**dadurch gekennzeichnet, dass** der Lichtdetektor Detektorsignale mittel- oder unmittelbar an eine an der mobilen Plattform angeordnete Auswerte- und Steuereinheit übermittelt,
dass die Auswerte- und Steuereinheit auf der Grundlage der Detektorsignale Steuersignale generiert, die dem Antrieb und der Navigation der mobilen Plattform dienen.

7. Mobile Plattform nach Anspruch 6,
**dadurch gekennzeichnet, dass** die Auswerte- und Steuereinheit auf der Grundlage eines vorgegebenen Umgebungsmodells und/oder eines durch die Anordnung generierten Umgebungsmodells die Steuersignale generiert.

8. Mobile Plattform nach einem der Ansprüche 1 bis 7,
**dadurch gekennzeichnet, dass** die mobile Plattform in Art eines Bodenreinigungsroboters ausgebildet ist.

9. Verwendung der mobilen Plattform nach einem der Ansprüche 1 bis 8 zur Mustererkennung von und Entfernungsmessung zu dreidimensionalen feststehenden oder bewegten Objekten.

10. Verfahren zur berührungslosen Entfernungsbestimmung nach Art des Lichtschnittverfahrens, bei dem ein mit einer Lichtquelle (2, 12) beleuchtetes Mittel mit einer ersten Kante (6, 6') einen Kantenschatten (9) projiziert, der sich durch eine Kontrastlinie zu einem unmittelbar an den projizierten Kantenschatten angrenzenden, von der Lichtquelle beleuchteten Bereich auszeichnet, wobei die Kontrastlinie von einem Lichtdetektor (3) erfasst und der Entfernungsbestimmung nach dem Lichtschnittverfahren sowie einer Erfassung eines Umgebungsszenarios um eine mobile Plattform (MP) sowie zu deren autonomen Navigation zugrunde gelegt wird, auf der die Lichtquelle, das Mittel sowie der Lichtdetektor angeordnet sind, wobei das von der Lichtquelle emittierte Licht unmittelbar, d.h. ausschließlich längs eines Luftweges, auf das Mittel trifft und dieses teilweise überstrahlt und den Kantenschatten auf ein vom Mittel beabstandetes Objekt in der Umgebung projiziert,
wobei dem Lichtschnittverfahren wenigstens zwei vom Lichtdetektor erfasste Bilder zugrundegelegt werden, von denen ein Bild eine Umgebung in einem von einer ersten Lichtquelle beleuchteten Zustand mit einer ersten Kontrastlinie darstellt und von denen das zweite Bild die Umgebung in einem von einer zweiten Lichtquelle beleuchteten Zustand mit einer zweiten Kontrastlinie darstellt, wobei beide Lichtquellen einen räumlichen Abstand zueinander aufweisen und derart angeordnet werden, so dass die erste und zweite Kontrastlinie mit einem vorgegebenen Abstand zueinander orientiert sind und jeweils durch separates Beleuchten der wenigstens ersten Kante mit beiden Lichtquellen erzeugt werden, und
wobei beide Bilder im Wege eines Differenzbildverfahrens ausgewertet werden.

## Claims

1. Mobile platform (MP) with an arrangement for contactless determination of distance of the type using the light intersection method, comprising two light sources (2, 12), a means for generating an optical contrast line (10), a light detector (3) for detecting an ambient scenario surrounding the mobile platform as well as for detecting the optical contrast line and for generating detector signals, and an evaluation and control unit which generates control signals on the basis of the detector signals, which control signals serve for driving and navigating the mobile platform,
wherein the means is arranged in direct succession and at a distance from the light sources such that only air is present in the beam paths of the light emitted by each of the light sources between the light sources and the means, the means includes a first edge (6, 6') through which the light emitted by both light sources can pass, thereby enabling a shadow (9) of the edge corresponding to the contrast line to be projected, to which an illuminated region of the surroundings which can be projected by the light source is adjacent, and
wherein the light sources are arranged with a spatial offset relative to one another in such manner that the contrast lines that are formed by separate illumination of the at least first edge (6, 6') for generating an optical contrast line with both light sources in each case are not congruent, and wherein the evaluation unit (11) performs a differential imaging procedure on each of the contrast lines detected by the light detector and uses them as the basis for the distance determination according to the light intersection method.

2. Mobile platform according to Claim 1,
**characterized in that** the at least one light source, the means for generating a light line projection and the light detector are fixedly mounted on a common support (1) and have a fixed spatial relationship with each other.

3. Mobile platform according to Claim 1 or 2,
**characterized in that** the means is embodied in the nature of a screen which is non-transparent for light, and at least a first edge of the means rectilinear or structured.

4. Mobile platform according to any one of Claims 1 to 3,
**characterized in that** the means has at least one second edge (6') through which the emitted light can pass, which is orthogonal or inclined with respect to the first edge.

5. Mobile platform according to any one of Claims 1 to 4,
**characterized in that** the at least one light source (2, 12) is an LED, incandescent lamp or gas discharge lamp.

6. Mobile platform according to any one of Claims 1 to 5,
**characterized in that** the light detector transmits detector signals indirectly or directly to an evaluation and control unit arranged on the mobile platform,
the evaluation and control unit generates control signals based on the detector signals, which are used for driving and navigating the mobile platform.

7. Mobile platform according to Claim 6,
**characterized in that** the evaluation and control unit generates the control signals based on a predefined surroundings model and/or a surroundings model generated by the assembly.

8. Mobile platform according to any one of Claims 1 to 7,
**characterized in that** the mobile platform is embodied in the nature of a floor cleaning robot.

9. Use of the mobile platform according to any one of Claims 1 to 8 for performing pattern recognition of and distance measurements from three-dimensional stationary or moving objects.

10. Method for contactless determination of distance of the type using the light intersection method, in which a means with a first edge (6, 6') that is illuminated with a light source (2, 12) projects an edge shadow (9) that is **characterized by** a contrast line with an region that is directly adjacent the projected edge shadow and is illuminated by the light source, wherein the contrast line is detected by a light detector (3) and is used as the basis for determining distance according to the light intersection method, and for determining a surroundings scenario around a mobile platform (MP) and for the autonomous navigation thereof, on which the light source, the means and the light detector are disposed,
wherein the light emitted by the light source falls on the means directly, that is to say exclusively along an air path, partially passing through said means and projecting the edge shadow on an object in the surroundings located at a distance from the means, wherein the light intersection method is based on at least two images detected by the light detector, of which one image represents a surrounding area in a state illuminated by a first light source with a first contrast line, and of which the second image represents the surrounding area in a state illuminated by a second light source with a second contrast line, wherein the two light sources are disposed at a distance from one another and are arranged in such manner that the first and second contrast lines are aligned with a predefined distance relative to each other, and each is generated by separate illumination of the at least first edge by both light sources, and
wherein both images are evaluated by way of a differential imaging method.

## Revendications

1. Plateforme mobile (MP) comportant un dispositif de détermination de distance sans contact selon la méthode de la section lumineuse comportant deux sources lumineuses (2, 12),
des moyens pour générer une ligne de contraste optique (10), un détecteur de lumière (3) pour détecter un scénario environnant entourant la plate-forme mobile ainsi que la ligne de contraste optique et pour générer des signaux de détecteur ainsi qu'une unité d'évaluation et de commande, qui génère des signaux de commande sur la base des signaux de détecteur, qui servent à l'entraînement et la navigation de la plate-forme mobile,
dans laquelle les moyens sont disposés en succession directe et à distance des sources lumineuses de telle sorte que dans le trajet du faisceau de la lumière émise dans chaque cas par les sources lumineuses entre les sources lumineuses et les moyens il y ait exclusivement de l'air, en ce que les moyens présentent un premier bord (6, 6') pouvant être irradié par la lumière émise par les deux sources lumineuses, à travers lequel peut être projetée une ombre (9) du bord, qui correspond à la ligne de contraste, à laquelle est juxtaposée une zone éclairée projetable par la source lumineuse de l'environnement, et
dans laquelle les sources lumineuses sont disposées avec un décalage spatial les unes par rapport aux autres, de sorte que les lignes de contraste, qui se forment en éclairant séparément au moins le premier bord (6, 6') pour générer une ligne de contraste optique avec les deux sources lumineuses, ne soient pas congruentes et dans laquelle l'unité d'évaluation (11) soumet chacune des lignes de contraste détectées par le détecteur de lumière à un procédé d'image différentielle ainsi que la détermination de distance selon la méthode de la section lumineuse.

2. Plate-forme mobile selon la revendication 1,
**caractérisée en ce que** la au moins une source lumineuse, le moyen de génération d'une projection de ligne lumineuse et le détecteur de lumière sont disposés de manière fixe sur un support commun (1) et ont une affectation spatiale fixe les uns par rapport aux autres.

3. Plate-forme mobile selon la revendication 1 ou 2,
**caractérisée en ce que** le moyen est conçu à la manière d'un diaphragme non transparent pour la lumière, et que le au moins premier bord du moyen est rectiligne ou structuré.

4. Plate-forme mobile selon une des revendications 1 à 3,
**caractérisée en ce que** le moyen présente au moins un deuxième bord (6') qui peut être irradié par la lumière émise et qui est disposé orthogonalement ou incliné par rapport au premier bord.

5. Plate-forme mobile selon une des revendications 1 à 4,
**caractérisée en ce que** la au moins une source lumineuse (2, 12) est une LED, une lampe incandescente ou une lampe à décharge de gaz.

6. Plate-forme mobile selon une des revendications 1 à 5, **caractérisée en ce que** le détecteur de lumière transmet des signaux de détecteur directement ou indirectement à une unité d'évaluation et de commande disposée sur la plate-forme mobile,
**que** l'unité d'évaluation et de commande génère des signaux de commande sur la base des signaux du détecteur, qui servent à l'entraînement et la navigation de la plate-forme mobile.

7. Plate-forme mobile selon la revendication 6,
**caractérisée en ce que** l'unité d'évaluation et de commande génère les signaux de commande à partir d'un modèle d'environnement prédéfini et/ou d'un modèle d'environnement généré par le dispositif.

8. Plate-forme mobile selon une des revendications 1 à 7,
**caractérisée en ce que** la plate-forme mobile est conçue à la manière d'un robot de nettoyage des sols.

9. Utilisation de la plate-forme mobile selon une des revendications 1 à 8 pour la reconnaissance de formes et la mesure de distance par rapport à des objets tridimensionnels fixes ou mobiles.

10. Procédé de détermination sans contact de la distance selon la méthode de la section lumineuse, dans lequel un moyen illuminé par une source lumineuse (2, 12) projette une ombre de bord (9) avec un premier bord (6, 6'), qui se **caractérise par** une ligne de contraste vers une zone directement adjacente à l'ombre de bord projetée et éclairée par la source lumineuse, dans lequel la ligne de contraste est détectée par un détecteur de lumière (3) et la détermination de la distance est basée sur la méthode de la section lumineuse ainsi qu'une détection d'un scénario environnant autour d'une plate-forme mobile (MP) et sa navigation autonome,
dans lequel la lumière émise par la source lumineuse bute sur le moyen directement, c'est-à-dire exclusivement le long d'un trajet aérien, et l'irradie partiellement et projette l'ombre du bord sur un objet à proximité qui est espacé du moyen,
dans lequel la méthode de section de la lumière est basée sur au moins deux images détectées par le détecteur de lumière, desquelles une image représente un environnement dans un état éclairé par une première source lumineuse avec une première ligne de contraste et la deuxième image représente l'environnement dans un état éclairé par une deuxième source lumineuse avec une deuxième ligne de contraste, dans lequel les deux sources lumineuses présentent une distance spatiale l'une par rapport à l'autre et sont disposées de telle sorte que la première et la deuxième ligne de contraste soient orientées à une distance prédéterminée l'une de l'autre et soient respectivement générées en éclairant séparément le au moins premier bord avec les deux sources lumineuses, et
dans lequel les deux images sont évaluées au moyen d'un procédé d'image différentielle.
